# DEMANDE DE BREVET EUROPEEN

(11) **EP 4 722 020 A1**
(43) Date de publication de la demande: **08.04.2026**
(21) Numéro de dépôt: 25206563.6
(22) Date de dépôt: 03.10.2025
(51) Int. Cl.: B60L 15/20, B60L 50/20, B60L 50/60, B62M 6/40, B62J 45/41, B62J 45/412, B62J 45/415, B62M 6/50, B62M 6/60, B62M 19/00, B62K 5/00

(54) **VÉHICULE ÉLECTRIQUE DE TRANSPORT ET PROCÉDÉ ASSOCIÉ**

(30) Priorité: 04.10.2024 FR 2410716
(71) Demandeur: Midipile, 16470 Saint-Michel (FR)
(72) Inventeur: TROUVE, Benoit, 16470 SAINT-MICHEL (FR); LECOMTE, Celian, 16160 GOND-PONTOUVRE (FR); COTONEA, Ehouarn, 16000 ANGOULEME (FR); BOURILLET, Félix, 16000 ANGOULEME (FR)
(74) Mandataire: Oak & Fox

(57) **Abrégé**

L'invention concerne un véhicule apte à transporter un conducteur et une charge comprenant notamment :
- un accélérateur configuré pour générer un signal d'accélérateur (S)
- un dispositif de mesure de masse (91) configuré pour déterminer une masse associée au véhicule (M) dépendante de la masse de ladite charge lorsqu'une charge est transportée par ledit véhicule,
- un dispositif de mesure de vitesse (96) configuré pour mesurer une vitesse associée au véhicule (Vv),
- un organe de commande (10) configuré pour déterminer une consigne moteur (Cm) en fonction de ladite masse associée au véhicule, dudit signal d'accélérateur, et de la vitesse associée au véhicule, puis transmettre ladite consigne moteur audit au moins un moteur électrique.

## Description

### Domaine technique de l'invention

La présente invention se rapporte au domaine technique des véhicules électriques, et plus particulièrement aux véhicules aptes à transporter une charge lourde.

### État de la technique

On connaît les véhicules aptes à transporter un conducteur et une charge lourde. On parle notamment de charge lourde pour des charges supérieures à 100 kg.

Un véhicule de ce type comprend généralement un moteur électrique configuré pour entraîner des roues dudit véhicule de manière à déplacer ledit véhicule à une vitesse et à une accélération à un instant t.

Un véhicule de ce type comprend, également, un accumulateur d'énergie électrique configuré pour alimenter le moteur électrique en électricité. Un véhicule de ce type comprend, enfin, un accélérateur configuré pour générer un signal d'accélérateur.

En fonctionnement, lorsqu'un signal d'accélérateur est donné, le véhicule se comporte différemment en fonction de la charge qu'il transporte. En effet, l'accélération sera plus importante si le véhicule se déplace à vide que s'il se déplace avec une charge lourde. Le comportement du véhicule est donc difficile à prévoir par le conducteur.

En outre, le conducteur ressent physiquement l'effet de l'accélération. Ce ressenti peut, dans certaines conditions, s'avérer dangereux, notamment en surprenant le conducteur en cas d'accélération brusque lorsque le véhicule se déplace à vide. Ce ressenti peut également provoquer de la frustration pour le conducteur lorsque le véhicule se déplace avec une charge lourde et que l'accélération est beaucoup plus faible qu'à vide.

Ce problème technique est directement lié à la spécificité de ce type de véhicule, en particulier, le fait que le véhicule comporte premièrement une motorisation électrique, et deuxièmement est destiné à transporter des charges lourdes. Les vélos du type de ceux décrits dans les documents CN 112 407 134 A (AMPRIO) et JP 2017 159 867 A (ALPS ELECTRIC CO) ne sont pas des véhicules aptes à transporter à la fois un conducteur et à la fois une charge lourde au sens de la présente demande et sont donc éloignées du domaine considéré.

On connait, également, les véhicules à pédales équipés d'une assistance électrique tels que ceux divulgués dans les documents FR 3 141 140 A1 (MEYER ALEXANDRE), CN 112 407 134 A (AMPRIO), EP 2 821 333 A1 (EMD ELECTRO MOBILITÉ DISTRIB), et JP 2017 159 867 A (ALPS ELECTRIC CO). Un véhicule de ce type comporte, généralement, un pédalier entrainant une ou plusieurs roues dudit véhicule par l'intermédiaire d'une transmission mécanique. L'effort à fournir par le conducteur sur le pédalier pour mettre en mouvement le véhicule est réduit, par rapport à un véhicule à pédalier sans assistance électrique, grâce à une motorisation électrique complétant le couple fourni aux roues par l'utilisateur en pédalant.

Ces véhicules à assistance électrique comportent le désavantage pour l'utilisateur de devoir fournir un effort non négligeable pour entrainer le véhicule en mouvement, l'effort pouvant varier considérablement selon que le véhicule est chargé ou pas, que le véhicule est en côte ou en descente, que le véhicule se déplace face au vent ou dos au vent, etc. Ceci induit une impression de conduite pour le conducteur très hétérogène et peu agréable.

Également, ces véhicules comportent généralement, des mécanismes de transmission complexes, incluant des boites de vitesse pouvant créer un inconfort pour l'utilisateur dû, notamment, aux à-coups, aux vibrations et aux bruits que ces systèmes peuvent engendrer en fonctionnement. En outre, les couplages mécaniques de ces transmissions sont sujets à de nombreuses pertes énergétiques que l'utilisateur doit compenser en pédalant.

Face à cet état de fait, l'invention a pour objectif de fournir un véhicule électrique plus sécuritaire, plus confortable et plus intuitif à conduire, tout en maîtrisant la consommation énergétique dudit véhicule.

### Résumé de l'invention

Selon un premier aspect, l'invention concerne un véhicule apte à transporter un conducteur et une charge comprenant :
- au moins un moteur électrique configuré pour entraîner au moins une roue dudit véhicule de manière à déplacer ledit véhicule à une vitesse et à une accélération à un instant t ;
- un accumulateur d'énergie électrique configuré pour alimenter ledit au moins un moteur électrique en électricité ;
- un accélérateur configuré pour générer un signal d'accélérateur ;
- un dispositif de mesure de masse configuré pour déterminer une masse associée au véhicule dépendante de la masse de ladite charge lorsqu'une charge est transportée par ledit véhicule,
- un dispositif de mesure de vitesse configuré pour mesurer une vitesse associée au véhicule,
- un organe de commande configuré pour déterminer une consigne moteur en fonction de ladite masse associée au véhicule, dudit signal d'accélérateur, et de la vitesse associée au véhicule, puis transmettre ladite consigne moteur audit au moins un moteur électrique.

Ce véhicule est remarquable en ce que l'accélérateur est une génératrice à pédales configurée pour :
- charger l'accumulateur d'énergie électrique et/ou alimenter le au moins un moteur électrique en électricité,
- générer le signal d'accélérateur.

L'organe de commande, par la génération d'une consigne moteur en fonction de la masse et de la vitesse du véhicule, permet de réguler l'accélération de sorte que le niveau d'accélération du véhicule se déplaçant à vide soit modérément plus élevé que le niveau d'accélération du véhicule se déplaçant avec une charge. Le comportement du véhicule est ainsi plus prévisible par le conducteur, d'une part, en évitant les accélérations brusques du véhicule lorsque celui-ci se déplace avec une charge légère, et d'autre part, en diminuant la différence d'accélération entre un déplacement avec charge lourde et un déplacement avec charge légère. Le conducteur ressent, dès lors, des sensations de conduite similaires, que le véhicule se déplace avec une charge lourde ou une charge légère. Le conducteur ressent, néanmoins, une légère différence qui lui permet de prendre conscience que le véhicule circule à vide ou chargé. Le conducteur, ayant ainsi conscience que le véhicule est chargé, évitera des changements de direction trop brusques pouvant risquer de renverser le véhicule. Grâce à ce double avantage de lissage du niveau d'accélération et de maintien d'un ressenti de la charge, le véhicule est alors plus sécuritaire, plus confortable et plus intuitif à conduire. En outre, limiter les surperformances en accélération, lorsque le véhicule se déplace à vide ou avec une charge légère, permet d'économiser de l'énergie électrique qui peut alors être redistribuée plus tard lorsque ledit véhicule se déplace avec une charge lourde. L'organe de commande permet de mieux répartir la consommation de l'énergie électrique en fonction des besoins liés à la masse du véhicule. Par la même, l'organe de commande sensibilise et accompagne le conducteur dans l'adoption d'une écoconduite.

Ce véhicule possède, également, l'avantage de permettre le chargement de l'accumulateur et/ou de générer un signal d'accélérateur par le pédalage du conducteur. En outre, la génératrice à pédales étant découplée mécaniquement des roues, ce type de véhicule fait l'économie des transmissions mécaniques des véhicules à assistance électrique de l'art antérieur. Ainsi, le confort de l'utilisateur est amélioré, l'effort à exercer sur les pédales étant complètement décorrélé du couple à produire sur les roues du véhicule, le couple à fournir sur la génératrice à pédales pouvant être maintenu constant au cours du temps ou régulé électroniquement de façon confortable pour l'utilisateur. L'absence de transmission mécanique limite également les à-coups, notamment dus aux boîtes de vitesse, les bruits et les vibrations. Enfin, l'absence de transmission mécanique permet de réduire les pertes mécaniques par rapport aux véhicules à assistance électrique, et ainsi, optimiser la consommation du véhicule et notamment, la recharge des batteries.

Selon un mode de réalisation, le dispositif de mesure de masse est configuré pour déterminer une masse associée au véhicule dépendant également de la masse du conducteur.

Un avantage est d'améliorer l'efficacité de l'organe de commande en prenant en considération une masse variable supplémentaire. En effet, la masse du conducteur peut varier d'un conducteur à l'autre et donc avoir une influence sur l'accélération du véhicule.

Selon un mode de réalisation, le véhicule comprend un détecteur de présence configuré pour détecter la présence d'un conducteur à l'intérieur du véhicule, et comprend un déclencheur configuré pour déclencher la détermination de ladite masse associée au véhicule lorsque ledit détecteur de présence détecte la présence d'un conducteur à l'intérieur dudit véhicule.

Un avantage est de permettre de s'assurer que la masse du conducteur soit prise en compte dans la détermination de la masse associée au véhicule.

Selon un mode de réalisation, d'une part, le véhicule comprend un dispositif de mesure de pente configuré pour mesurer l'angle de la pente sur laquelle se situe ledit véhicule, et d'autre part, l'organe de commande est configuré pour déterminer ladite consigne moteur en fonction de la masse associée au véhicule, du signal d'accélérateur, et éventuellement de la vitesse associée au véhicule, et dudit angle de la pente mesuré.

Un avantage est d'améliorer l'efficacité de l'organe de commande en prenant en considération une variable supplémentaire qui est l'angle de la pente sur laquelle se situe ledit véhicule. En effet, l'angle de la pente peut influer sur les performances, et en particulier l'accélération, du véhicule pour une valeur constante de l'intensité du courant électrique à délivrer au moteur électrique.

Selon un mode de réalisation, d'une part, le véhicule comprend un dispositif de mesure de vent configuré pour mesurer l'effort exercé par le vent sur ledit véhicule, et d'autre part, l'organe de commande est configuré pour déterminer ladite consigne moteur en fonction de la masse associée au véhicule, du signal d'accélérateur, et éventuellement de la vitesse associée au véhicule, éventuellement de l'angle de la pente, et dudit effort exercé par le vent mesuré.

Un avantage est d'améliorer l'efficacité de l'organe de commande en prenant en considération une variable supplémentaire qui est l'effort exercé par le vent sur ledit véhicule. En effet, l'effort exercé par le vent peut influer sur les performances, et en particulier l'accélération, du véhicule pour une valeur constante de l'intensité du courant électrique à délivrer au moteur électrique.

Selon un autre aspect, l'invention concerne un procédé de commande moteur d'un véhicule apte à transporter un conducteur et une charge, ledit véhicule comprenant :
- au moins un moteur électrique configuré pour entraîner au moins une roue dudit véhicule de manière à déplacer ledit véhicule à une vitesse et à une accélération à un instant t ;
- un accumulateur d'énergie électrique configuré pour alimenter ledit au moins un moteur électrique en électricité ;
le procédé étant caractérisé en ce qu'il comprend les étapes suivantes :
- a) déterminer une masse associée au véhicule dépendante de la masse de ladite charge lorsqu'une charge est transportée par ledit véhicule, comme première variable ;
- b) générer un signal d'accélérateur, comme deuxième variable ;
- c) déterminer une vitesse associée au véhicule, comme troisième variable
- d) déterminer une consigne moteur en fonction desdites variables,
- e) transmettre ladite consigne moteur audit au moins un moteur électrique.

Un avantage du procédé est, par la génération d'une consigne moteur en fonction de la masse et de la vitesse du véhicule, de permettre de réguler l'accélération de sorte que le niveau d'accélération du véhicule se déplaçant à vide soit modérément plus élevé que le niveau d'accélération du véhicule se déplaçant avec une charge. Le comportement du véhicule est ainsi plus prévisible par le conducteur, d'une part, en évitant les accélérations brusques du véhicule lorsque celui-ci se déplace avec une charge légère, et d'autre part, en diminuant la différence d'accélération entre un déplacement avec charge lourde et un déplacement avec charge légère. Le conducteur ressent, dès lors, des sensations de conduite similaires, que le véhicule se déplace avec une charge lourde ou une charge légère. Le conducteur ressent, néanmoins, une légère différence qui lui permet de prendre conscience que le véhicule circule à vide ou chargé. Le conducteur, ayant ainsi conscience que le véhicule est chargé, évitera des changements de direction trop brusques pouvant risquer de renverser le véhicule. Grâce à ce double avantage de lissage du niveau d'accélération et de maintien d'un ressenti de la charge, le véhicule est alors plus sécuritaire, plus confortable et plus intuitif à conduire.

Selon un mode de réalisation, le procédé comprend l'étape :
- h) ajuster la valeur de l'intensité du courant électrique moteur en fonction de ladite consigne moteur.

Un avantage est de permettre l'utilisation de moteurs du commerce équipés d'un préactionneur.

Selon un mode de réalisation, le procédé comprend l'étape :
- a') déterminer une masse associée au véhicule dépendant également de la masse du conducteur.

Un avantage est d'améliorer l'efficacité du procédé de commande moteur en prenant en considération une masse variable supplémentaire. En effet, la masse du conducteur peut varier d'un conducteur à l'autre et donc avoir une influence sur l'accélération obtenue.

Selon un mode de réalisation, l'étape a) comprend la sous-étape suivante :
- a1) déterminer ladite masse associée au véhicule lorsque ledit véhicule est à l'arrêt.

Un avantage est de permettre une économie d'énergie électrique en limitant le nombre de prises de mesure de la masse associée au véhicule.

Selon un mode de réalisation, l'étape a) comprend la sous étape suivante :
- a2) déterminer ladite masse associée au véhicule lorsque le véhicule est en mouvement en :
   - mesurant une masse associée au véhicule en mouvement,
   - corrigeant la mesure de manière à compenser les effets cinétiques et dynamiques liés au mouvement dudit véhicule et impactant la mesure.

Un avantage est de permettre de déterminer la masse associée au véhicule en mouvement.

Selon un mode de réalisation, à l'étape d), pour une gamme de vitesses prédéterminée, la consigne moteur est :
- déterminée en fonction d'un premier couple moteur prédéterminé lorsque le signal d'accélérateur est inférieur à un seuil, et
- déterminée en fonction d'un deuxième couple moteur prédéterminé, lorsque le signal d'accélérateur est supérieur audit seuil, la valeur absolue dudit deuxième couple moteur prédéterminé étant supérieure à la valeur absolue dudit premier couple moteur prédéterminé.

Un avantage est de permettre de renforcer le couple moteur au-dessus d'un seuil du signal d'accélération, on parlera de fonction « boost » en langue anglaise. Ceci peut, en particulier, être pertinent pour passer un obstacle, comme un trottoir, à faible vitesse.

### Description des figures

D'autres particularités et avantages de l'invention ressortiront à la lecture de la description détaillée faite ci-après de modes de réalisation particuliers de l'invention, donnés à titre indicatif, mais non limitatifs, en référence aux dessins annexés qui illustrent :
- La Figure 1 est une vue schématique d'un mode de réalisation du véhicule objet de l'invention ;
- La Figure 2 est une vue schématique d'un mode de réalisation du système de commande moteur du véhicule objet de l'invention.

### Description détaillée

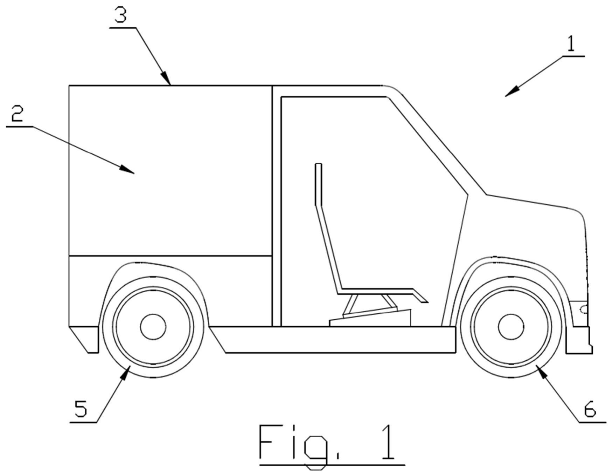

Selon un premier aspect, en référence à la figure 1, l'invention concerne un véhicule 1 apte à transporter un conducteur et apte à transporter une charge. La charge peut se présenter sous la forme d'un ou plusieurs objets.

Selon un mode de réalisation, le véhicule 1 est apte à transporter une charge de masse maximale égale à 300 kg.

Dans des variantes de réalisation, le véhicule 1 est apte à transporter une charge de masse maximale égale à 100 kg, 150 kg, 200 kg, 250 kg, 350 kg, ou toute autre masse maximale compatible avec le véhicule 1.

Selon un mode de réalisation, le véhicule 1 comporte une plateforme destinée à recevoir au moins une partie de la charge. La plateforme comprend par exemple des rebords latéraux.

Selon un mode de réalisation illustré en figure 1, la plateforme comprend des parois latérales 2 et d'un toit 3.

Selon un mode de réalisation, un ou plusieurs éléments amovibles peuvent être montés sur la plateforme. Dans cet exemple de réalisations, le ou les éléments amovibles sont considérés comme faisant partie de la charge.

Selon un mode de réalisation, le ou les éléments amovibles comprennent des parois latérales amovibles.

Selon un mode de réalisation, le ou les éléments comprennent un toit amovible.

Selon un mode de réalisation, le ou les éléments comprennent des rebords latéraux amovibles.

Un avantage est de permettre de monter/démonter des parois, un toit et/ou des rebords latéraux sur la plateforme.

Selon un mode de réalisation, le véhicule 1 comporte des barres de toit destinées à recevoir au moins une partie de la charge. Les barres de toit se présentent sous la forme de deux barres longitudinales reliées entre elles par des traverses. Chaque barre est équipée d'au moins deux platines de fixation. Ces dernières sont attachées sur le toit du véhicule 1. Lorsque ce dernier ne comporte pas de barres de toit, la plateforme peut, préférentiellement, recevoir la totalité de la charge.

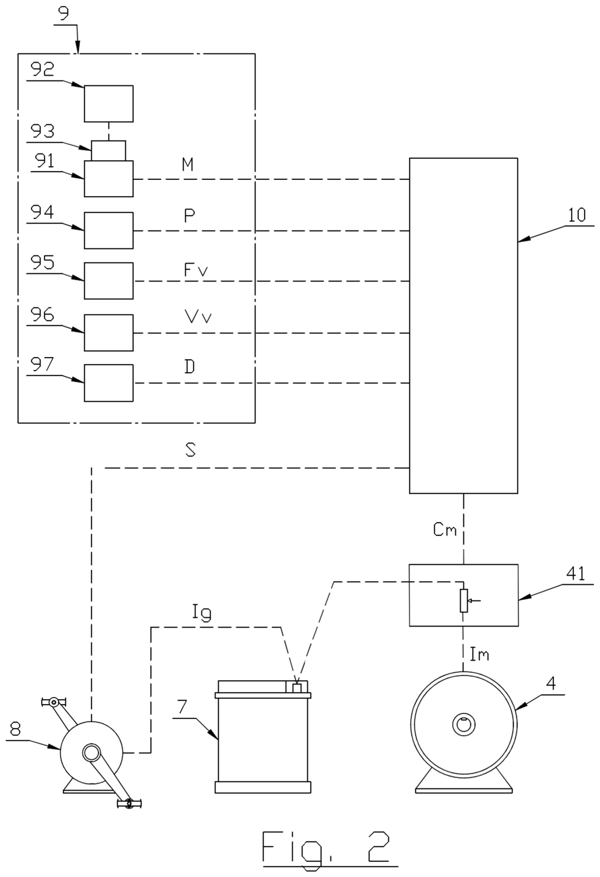

En référence à la figure 2, le véhicule 1 comprend au moins un moteur électrique 4 configuré pour entraîner au moins une roue 5 du véhicule 1 de manière à déplacer ledit véhicule à une vitesse et à une accélération à un instant t.

L'accélération peut avoir une valeur positive et induire une augmentation de la vitesse du véhicule 1. On parlera d'« accélération positive ».

L'accélération peut également avoir une valeur négative et induire une réduction de la vitesse du véhicule 1. On parlera d'« accélération négative », ou encore de « décélération ».

Le au moins un moteur électrique 4 est préférentiellement un moteur à courant électrique alternatif. Le au moins un moteur électrique 4 à courant électrique alternatif peut être un moteur synchrone ou asynchrone. Lorsque le au moins un moteur électrique 4 est à courant alternatif, ledit au moins un moteur électrique peut être équipé d'un convertisseur configuré pour convertir un courant électrique moteur Im continu en courant électrique moteur alternatif. C'est notamment le cas lorsque le au moins un moteur électrique 4 est alimenté par l'accumulateur d'énergie électrique 7. Dans la suite de la description, les valeurs d'intensité du courant électrique moteur Im sont les valeurs d'intensité du courant électrique continu en entrée dudit convertisseur. Le au moins un moteur électrique 4 peut, ainsi, être alimenté par un courant électrique moteur Im d'intensité comprise entre 0 A et 400 A. Plus la valeur de l'intensité du courant électrique moteur Im est importante, plus la valeur du couple mécanique transmis par le au moins un moteur électrique 4 à la ou les roues 5 est importante. L'augmentation de la valeur de l'intensité du courant électrique moteur Im induit donc une accélération positive du véhicule 1. Plus cette augmentation est importante, plus l'accélération positive est importante. Inversement, une diminution de la valeur de l'intensité du courant électrique moteur Im induit une accélération négative du véhicule 1. Plus cette diminution est importante, plus l'accélération négative est importante. Dans le cadre du freinage, il est également possible d'inverser le sens de circulation du courant électrique du au moins un moteur électrique 4 et de se servir dudit moteur électrique comme d'une génératrice d'énergie électrique. L'intensité du courant électrique moteur Im mesurée sera alors négative. L'intensité du courant électrique moteur Im peut, par exemple, être comprise entre - 200 A et 0 A. Lorsqu'il fonctionne en génératrice d'énergie électrique, le moteur électrique 4 peut être configuré pour charger l'accumulateur d'énergie électrique 7 décrit ultérieurement. On parle de « freinage régénératif ».

Chaque moteur électrique 4 peut également être équipé d'un réducteur agencé entre l'arbre moteur et la ou les roues qu'il entraîne.

Selon un mode de réalisation, en référence à la figure 1, le véhicule 1 comporte deux roues 5 entraînées par le au moins un moteur électrique 4. On parle alors de « roues motrices ».

Selon un mode de réalisation, le véhicule 1 comporte un unique moteur électrique 4 apte à entraîner les deux roues 5.

Selon un mode de réalisation, le véhicule 1 comporte deux moteurs électriques 4, chacun étant apte à entraîner l'une, respectivement l'autre, roue 5.

Selon un mode de réalisation, le véhicule 1 comporte un moteur électrique 4 apte à entraîner une unique roue 5. C'est, notamment, le cas pour un tricycle à une seule roue motrice.

Selon un mode de réalisation préféré, la ou les roues 5 sont agencées à l'arrière du véhicule 1, comme représenté sur la figure 1. Le véhicule 1 comprend par exemple un train roulant arrière comprenant la ou les roues 5.

Dans une variante de réalisation non représentée, la ou les roues 5 sont agencées à l'avant du véhicule 1. Le véhicule 1 comprend par exemple un train roulant avant comprenant la ou les roues 5.

Selon un mode de réalisation, le véhicule 1 comprend une pluralité de roues libres 6. On entend par « libres », le fait que les roues libres 6 ne sont pas entraînées par le au moins un moteur électrique 4.

Les roues libres 6 sont préférentiellement agencées à l'avant du véhicule 1, comme schématisé sur la figure 1. Le train roulant avant du véhicule 1 comprend par exemple les roues libres 6.

Dans une variante de réalisation non représentée, les roues libres 6 sont agencées à l'arrière du véhicule 1. Dans ce cas, le train roulant arrière du véhicule 1 comprend par exemple les roues libres 6.

Dans une autre variante de réalisation, le véhicule 1 comporte quatre roues 5 entraînées par le au moins un moteur électrique 4, deux des roues 5 étant agencées à l'avant dudit véhicule 1, et les deux autres roues 5 étant agencées à l'arrière dudit véhicule 1.

Selon un mode de réalisation, le véhicule 1 comporte un unique moteur électrique 4 apte à entraîner les quatre roues 5.

Selon un mode de réalisation, le véhicule 1 comporte deux moteurs électriques 4, un premier moteur électrique 4 étant apte à entraîner les deux roues 5 avant et un deuxième moteur électrique 4 étant apte à entraîner les deux roues 5 arrière.

Selon un mode de réalisation, le véhicule 1 comporte quatre moteurs électriques 4, chacun étant apte à entraîner l'une des roues 5.

En référence à la figure 2, le véhicule 1 comprend un accumulateur d'énergie électrique 7 configuré pour alimenter le au moins un moteur électrique 4 en électricité.

Selon un mode de réalisation, l'accumulateur d'énergie électrique 7 comprend au moins une batterie.

Selon un mode de réalisation, l'accumulateur d'énergie électrique 7 comprend au moins un supercondensateur.

Selon d'autres modes de réalisation, l'accumulateur d'énergie électrique 7 comprend une combinaison de batteries et/ou une combinaison de supercondensateurs.

En référence à la figure 2, le véhicule 1 peut comprendre une génératrice à pédales 8. On entend par « génératrice à pédales », une génératrice électrique tournante couplée à un pédalier. On entend par « pédalier », un ensemble de deux pédales et deux manivelles, chaque pédale étant montée mobile sur une manivelle distincte, les deux dites manivelles étant destinées à être montées dans un sens opposé de part et d'autre d'un arbre. On entend par « génératrice électrique tournante », une machine tournante apte à produire de l'électricité par la rotation d'un rotor par rapport à un stator. Dans le cadre d'une génératrice à pédales, le rotor de la génératrice électrique tournante est monté sur un arbre, et le pédalier est apte à entraîner l'arbre soit en étant directement monté sur l'arbre, soit par l'intermédiaire d'un réducteur intégré à ladite génératrice à pédales. Dans ce dernier cas, la génératrice électrique tournante et le réducteur sont, généralement, agencés dans un carter commun traversé par un arbre sur lequel est monté le pédalier. Le mouvement du rotor de la génératrice à pédales 8 est en permanence découplé mécaniquement du mouvement des roues 5, 6 et de celui de l'arbre du ou de chacun des moteurs électriques 4 du véhicule 1.

Selon un mode de réalisation, la génératrice à pédales 8 peut être configurée pour charger l'accumulateur d'énergie électrique 7.

Un avantage est de permettre d'augmenter l'autonomie du véhicule 1 tout en limitant la taille et la masse de l'accumulateur d'énergie électrique 7. Le véhicule 1 est ainsi plus léger qu'un véhicule électrique traditionnel, mais également plus écologique, ce dernier nécessitant moins de matériaux potentiellement polluants pour sa fabrication, moins d'énergie électrique pour se déplacer, car plus léger, et moins d'énergie électrique en provenance du réseau électrique pour sa recharge.

Un autre avantage est de permettre de sensibiliser le conducteur sur les besoins énergétiques du véhicule 1. En effet, le conducteur est actif et doit fournir un effort continu pour maintenir le véhicule 1 en déplacement. Il prend alors conscience des besoins énergétiques du véhicule 1 et tend alors à se limiter aux déplacements strictement nécessaires de manière à ménager son effort. Le véhicule 1 a donc tendance à être utilisé de manière plus rationnelle qu'un véhicule électrique traditionnel et donc être encore moins consommateur d'énergie électrique.

Selon un mode de réalisation, la génératrice à pédales 8 est configurée pour alimenter le au moins un moteur électrique 4 en électricité. Cette alimentation du au moins un moteur électrique 4 peut être réalisée indépendamment, ou en combinaison, de l'alimentation du au moins un moteur électrique 4 par l'accumulateur d'énergie électrique 7.

Le véhicule 1 comprend un accélérateur configuré pour générer un signal d'accélérateur S.

Dans un mode de réalisation, la fonction d'accélérateur peut être mise en œuvre par la génératrice à pédales 8. Dans ce cas, la génératrice à pédales 8 est configurée pour générer un signal d'accélérateur S.

Selon un mode préféré de réalisation, le signal d'accélérateur S se présente par exemple sous la forme d'une mesure de la vitesse de rotation des pédales Vr. On parlera par la suite de « signal d'accélérateur S en vitesse ». La génératrice à pédales 8 peut alors être équipée d'un tachymètre configuré pour mesurer la vitesse de rotation des pédales Vr, d'un capteur de vitesse de rotation optique, magnétique, ou de tout autre capteur de vitesse de rotation convenant à l'homme du métier.

Dans un mode de réalisation, la mesure de la vitesse de rotation des pédales Vr peut être exprimée en tours par minute.

Dans un mode de réalisation, la mesure de la vitesse de rotation des pédales Vr peut être exprimée en pourcentage. Ce pourcentage peut par exemple varier entre 0 % et 100 %. La valeur 0 % peut correspondre à une vitesse de rotation des pédales Vr égale à 0 tr/min, c'est-à-dire lorsque les pédales sont à l'arrêt. La valeur 100 % peut correspondre à une vitesse de rotation des pédales Vr égale ou supérieure à une valeur de seuil de vitesse maximale de rotation Vrmax. Cette valeur de seuil de vitesse maximale de rotation Vrmax peut par exemple être choisie égale à 113 tr/min.

Dans d'autres modes de réalisation, la mesure de la vitesse de rotation des pédales Vr peut être exprimée sous toute autre forme convenant à l'homme du métier.

Selon une variante de réalisation, le signal d'accélérateur S se présente par exemple sous la forme d'un courant électrique induit Ig par la génératrice à pédales lorsque le conducteur actionne la rotation des pédales.

Selon un mode de réalisation, l'intensité du courant électrique induit Ig est exploitée pour déterminer la valeur du signal d'accélérateur. En effet, plus la vitesse de rotation des pédales est importante, plus l'intensité du courant électrique induit Ig est importante. Ainsi, une augmentation de la valeur de l'intensité du courant électrique induit Ig traduit une augmentation de la vitesse de rotation des pédales. Inversement, une diminution de la valeur de l'intensité du courant électrique induit Ig traduit une diminution de la vitesse de rotation des pédales. On parlera par la suite de « signal d'accélérateur S en intensité ».

Selon un mode de réalisation, la fréquence du courant électrique induit Ig est exploitée pour déterminer la valeur du signal d'accélérateur. En effet, plus la vitesse de rotation des pédales est importante, plus la fréquence du courant électrique induit Ig est importante. Ainsi, une augmentation de la valeur de la fréquence du courant électrique induit Ig traduit une augmentation de la vitesse de rotation des pédales. Inversement, une diminution de la valeur de la fréquence du courant électrique induit Ig traduit une diminution de la vitesse de rotation des pédales. On parle alors de « signal d'accélérateur S en fréquence ». Dans la suite de la description et par mesure de simplification, seul le cas du signal d'accélérateur S en intensité sera développé. Néanmoins, pour tout mode de réalisation, décrivant un signal d'accélérateur S en intensité, il existe une variante de réalisation dans laquelle le signal d'accélérateur S en intensité est remplacé par le signal d'accélérateur S en fréquence.

De manière à améliorer le confort du conducteur, la résistance au pédalage peut être augmentée en commandant une augmentation de la valeur de l'intensité du courant électrique induit Ig. Cette résistance permet notamment d'éviter que l'utilisateur ne pédale très vite dans le vide. Néanmoins, l'intensité de l'effort à exercer par le conducteur sur les pédales est, généralement, totalement décorrélée de la masse associée au véhicule M. Autrement dit, l'intensité de l'effort sera le même, quelle que soit la masse totale du véhicule 1. L'intensité de l'effort à exercer peut, toutefois, évoluer en fonction de la vitesse du véhicule 1. En pratique, la valeur de l'intensité du courant électrique induit Ig peut être régulée au-dessus d'une valeur de seuil minimal Imin afin que le conducteur ressente toujours une résistance au pédalage, et en dessous d'une valeur de seuil maximal Imax au-delà de laquelle la résistance au pédalage serait trop importante pour être maintenue pendant plusieurs minutes sans être perçue comme inconfortable par le conducteur.

Dans un mode de réalisation, la fonction d'accélérateur peut être mise en œuvre par une gâchette d'accélération. Dans ce cas, le véhicule 1 peut comprendre une gâchette d'accélération.

Lorsque seule la gâchette d'accélération met en œuvre la fonction d'accélérateur, ladite gâchette d'accélération peut être configurée pour générer le signal d'accélérateur S.

Dans un mode préféré de réalisation, la fonction d'accélérateur peut être mise en œuvre par la génératrice à pédales, et une fonction d'accélération secondaire peut être mise en œuvre par la gâchette d'accélération. Cette dernière peut alors être configurée pour générer un signal d'accélérateur secondaire S'. Le signal d'accélérateur secondaire S' peut être exprimé en pourcentage. Ce pourcentage peut par exemple varier entre 0 % et 100 %. La valeur 0 % peut correspondre à la gâchette dans une position initiale, c'est-à-dire lorsqu'aucun effort n'est appliqué sur la gâchette. La valeur 100 % peut correspondre à la gâchette dans une position complètement enfoncée. Dans une variante de réalisation, la gâchette d'accélération peut être configurée pour générer le signal d'accélérateur S à la place de la génératrice à pédales 8. Le signal d'accélération S s'exprime également en pourcentage selon le même fonctionnement que celui décrit pour le signal d'accélérateur secondaire S'.

Dans un mode préféré de réalisation, la fonction d'accélérateur et la fonction d'accélération secondaire sont toutes deux mises en œuvre par la génératrice à pédales. En particulier, pour une gamme de vitesses prédéterminée, la consigne moteur Cm est, par exemple :
- déterminée en fonction d'un premier couple moteur prédéterminé Cp1 lorsque le signal d'accélérateur S est inférieur à un seuil, et
- déterminée en fonction d'un deuxième couple moteur prédéterminé Cp2, lorsque le signal d'accélérateur S est supérieur audit seuil, la valeur absolue dudit deuxième couple moteur prédéterminé Cp2 étant supérieure à la valeur absolue dudit premier couple moteur prédéterminé Cp1, soit |Cp2| > |Cp1|.

Il est ainsi possible de renforcer le couple moteur à certaines vitesses par exemple pour passer un trottoir ou faire des manœuvres en pente.

Selon un mode de réalisation, la gamme de vitesses correspond à une vitesse associée au véhicule Vv comprise entre -3 km/h et 3 km/h. Selon un mode de réalisation, la gamme de vitesses correspond à une vitesse comprise entre -1 km/h et 1 km/h.

Selon un mode de réalisation, le seuil pour le signal d'accélérateur S est supérieur ou égal à 70% de la consigne maximale d'accélération.

Selon un mode de réalisation, la valeur absolue dudit deuxième couple moteur prédéterminé Cp2 est supérieure d'au moins 25% à la valeur absolue dudit premier couple moteur prédéterminé Cp1, soit Cp2 ≥ 1,25 x Cp1.

Selon un mode de réalisation, la valeur absolue dudit deuxième couple moteur prédéterminé Cp2 est supérieure d'au moins 50% à la valeur absolue dudit premier couple moteur prédéterminé Cp1, soit Cp2 ≥ 1,5 x Cp1.

Selon un mode de réalisation, la valeur absolue dudit deuxième couple moteur prédéterminé Cp2 est supérieure d'au moins 70% à la valeur absolue dudit premier couple moteur prédéterminé Cp1, soit Cp2 ≥ 1,7 x Cp1.

Selon un mode de réalisation, à différentes gammes de vitesses correspondent différentes augmentations du couple. Par exemple, sur une première gamme de vitesses la valeur absolue dudit deuxième couple moteur prédéterminé Cp2 est supérieure d'au moins 25% à la valeur absolue dudit premier couple moteur prédéterminé Cp1, et sur une deuxième gamme de vitesses la valeur absolue dudit deuxième couple moteur prédéterminé Cp2 est supérieure d'au moins 70% à la valeur absolue dudit premier couple moteur prédéterminé Cp1.

Selon un mode de réalisation, à différents modes de fonctionnement correspondent différentes augmentations du couple. En particulier, selon que le véhicule avance, recule ou freine, les couples et les augmentations de couple peuvent différer.

Dans un mode de réalisation, la fonction d'accélérateur peut être mise en œuvre par une pédale d'accélération. Dans ce cas, le véhicule 1 peut comprendre une pédale d'accélération. Dans ce cas, seule la pédale d'accélération met en œuvre la fonction d'accélérateur, ladite pédale d'accélération étant configurée pour générer le signal d'accélérateur S.

En référence à la figure 2, le véhicule 1 comprend un dispositif de mesure de masse 1 configuré pour déterminer une masse associée au véhicule M. La mesure de la masse associée au véhicule M peut être exprimée en kilogramme.

La masse associée au véhicule M est fonction de la masse de la charge Mch, lorsqu'une charge est transportée par le véhicule 1. Dans un mode de réalisation, la masse associée au véhicule M est également fonction de la masse du conducteur Mco.

La détermination de la masse associée au véhicule M peut varier selon les modes de réalisation choisis. Il est important que la masse associée au véhicule M soit déterminée en fonction de la masse de la charge Mch, étant donné que cette dimension est variable au cours du temps. En effet, la masse de la charge peut varier très largement de 0kg lorsqu'aucune charge n'est transportée par le véhicule 1, à 300 kg pour les charges les plus lourdes dans le mode préféré de réalisation.

Selon un mode de réalisation, la masse associée au véhicule M est égale à la somme de la masse du véhicule à vide Mvv et de la masse de la charge Mch.

Selon un mode de réalisation, la masse associée au véhicule M est égale à la masse de la charge Mch.

Un avantage est de simplifier le calcul de la masse associée au véhicule M. En effet, la masse du véhicule à vide Mvv étant généralement constante dans le temps, elle peut généralement être négligée au profit de la masse de la charge qui est variable dans le temps.

Selon un mode de réalisation, la masse associée au véhicule M est égale à la somme d'une masse partielle du véhicule à vide Mpvv et de la masse de la charge Mch.

Un avantage est de permettre de déterminer une masse associée au véhicule au moyen d'une masse partielle, mais constante dans le temps, même lorsqu'une mesure de l'ensemble de la masse du véhicule à vide Mvv est impossible.

Également, il peut être judicieux que la masse associée au véhicule M soit également déterminée en fonction de la masse du conducteur Mco étant donné que cette dimension est aussi variable au cours du temps. En effet, deux conducteurs différents peuvent avoir des masses différentes, parfois différentes de plusieurs dizaines de kilogrammes.

Selon un mode de réalisation, la masse associée au véhicule M est égale à la somme de la masse du véhicule à vide Mvv, de la masse du conducteur Mco, et de la masse de la charge Mch.

Selon un mode de réalisation, la masse associée au véhicule M est égale à la somme de la masse du conducteur Mco et de la masse de la charge Mch.

Un avantage est de simplifier le calcul de la masse associée au véhicule M. En effet, la masse du véhicule à vide Mvv étant généralement constante dans le temps, elle peut généralement être négligée au profit des masses variables dans le temps.

Selon un mode de réalisation, la masse associée au véhicule M est égale à la somme d'une masse partielle du véhicule à vide Mpvv, de la masse du conducteur Mco et de la masse de la charge Mch.

Un avantage est de permettre de déterminer une masse associée au véhicule au moyen d'une masse constante dans le temps, même lorsqu'une mesure de l'ensemble de la masse du véhicule à vide Mvv est impossible.

Selon un mode de réalisation, le véhicule 1 comprend un châssis.

Selon un mode de réalisation, le dispositif de mesure de masse 91 comprend au moins une jauge de contrainte agencée de manière à permettre la détermination de la masse associée au véhicule M.

La jauge de contrainte est, par exemple, agencée et/ou configurée pour mesurer une masse associée au véhicule M égale à une somme d'une masse partielle du véhicule à vide Mpvv, d'une masse du conducteur Mco et d'une masse de la charge Mch.

Selon un mode de réalisation, le véhicule 1 comprend au moins deux trains roulants.

Selon un mode de réalisation, le dispositif de mesure de masse 91 peut comprendre une jauge de contrainte sur le train roulant arrière.

Selon un mode de réalisation, le dispositif de mesure de masse 91 peut comprendre au moins une jauge de contrainte par train roulant.

La ou les jauges de contrainte sont alors agencées pour permettre la détermination de la masse associée au véhicule M. La ou les jauges de contrainte sont, par exemple, configurées pour mesurer une masse associée au véhicule M, qui est, par exemple, égale à la somme d'une masse partielle du véhicule à vide Mpvv, de la masse du conducteur Mco et de la masse de la charge Mch.

Selon un mode de réalisation, le véhicule 1 peut comprendre une suspension par roue 5, et par roue libre 6 lorsque ledit véhicule comprend des roues libres 6.

Dans ce cas, le dispositif de mesure de masse 91 peut comprendre, sur la suspension d'au moins une des roues 5 agencées à l'arrière du véhicule 1, ou d'au moins une des roues libres 6 agencées à l'arrière du véhicule 1, un capteur d'enfoncement de ladite suspension. Ce capteur d'enfoncement peut être configuré pour mesurer l'enfoncement de la suspension. Le dispositif de mesure de masse 91 peut alors être configuré pour déterminer la masse associée au véhicule M en fonction de l'enfoncement de la suspension et d'une ou plusieurs caractéristiques de la suspension. En particulier, une caractéristique de la suspension peut être sa raideur. Une autre caractéristique peut, par exemple, être l'inclinaison de la suspension par rapport à un axe vertical.

Dans un mode de réalisation, le dispositif de mesure de masse 91 peut également comprendre, sur la suspension d'au moins une des roues 5 agencées à l'avant du véhicule 1, ou d'au moins une des roues libres 6 agencées à l'avant du véhicule 1, un capteur d'enfoncement de ladite suspension

Selon des variantes de réalisation, le dispositif de mesure de masse 91 comprend tout autre moyen de mesure adapté pour permettre la détermination de la masse associée au véhicule M.

Selon un mode de réalisation, le dispositif de mesure de masse 91 est configuré pour déterminer une masse associée au véhicule M de manière séquentielle.

Un avantage est de limiter la consommation d'énergie électrique du dispositif de mesure de masse 91.

Selon un exemple de réalisation, le dispositif de mesure de masse 91 est configuré pour déterminer la masse associée au véhicule M à un instant tm auquel le véhicule 1 est chargé et auquel le conducteur se trouve à bord du véhicule 1. Des mesures de masse sont effectuées de manière séquentielle pour permettre de déterminer la masse associée au véhicule M.

Un avantage est de limiter la consommation d'énergie électrique du dispositif de mesure de masse 91 en considérant que la masse de la charge Mch et la masse du conducteur Mco sont constantes lorsque le véhicule est en mouvement. Ces considérations d'économie d'énergie sont d'autant plus importantes dans le cas de véhicule électrique à pédalier du type de celui de l'invention, dès lors qu'il est difficile d'augmenter à volonté la capacité des batteries, ledit véhicule devant rester léger, c'est-à-dire avec une masse à vide inférieure à 400 kg, préférentiellement autour de 350 kg à 20 kg près.

Selon un mode de réalisation, le véhicule 1 peut comprendre un détecteur de présence 92. Le détecteur de présence est, par exemple, configuré pour détecter une présence d'un conducteur à l'intérieur du véhicule 1. Le dispositif de mesure de masse 91 et le détecteur de présence 92 peuvent faire partie d'un système d'instrumentation 9, comme représenté à la figure 2.

Selon un exemple de réalisation, le détecteur de présence 92 est configuré pour détecter un évènement, tel qu'un actionnement d'un équipement du véhicule 1, par exemple, un verrouillage d'une ceinture de sécurité, un mouvement d'un siège, un actionnement d'une vitre, un déverrouillage d'un frein à main, ou tout autre évènement permettant de déduire la présence d'un conducteur à bord du véhicule 1.

Le détecteur de présence 92 est, par exemple, configuré pour détecter la présence d'un conducteur à l'intérieur du véhicule 1 en réponse à une détection d'au moins un évènement, ou encore en réponse à une détection d'une combinaison de plusieurs évènements, ou encore en réponse à une séquence particulière d'évènements détectés selon une chronologie particulière.

Selon un mode de réalisation, le véhicule 1 peut comprendre un déclencheur 93 configuré pour déclencher la détermination de ladite masse associée au véhicule M lorsque le détecteur de présence 92 détecte la présence d'un conducteur à l'intérieur du véhicule 1. Le déclencheur 93 peut faire partie du système d'instrumentation 9, comme représenté à la figure 2. Le déclencheur 93 comprend, par exemple, une carte électronique. Cette dernière peut intégrer un microprocesseur. Dans ce cas, le déclencheur peut comporter un logiciel enregistré dans une mémoire. Le logiciel peut alors être configuré, lorsqu'il est exécuté par le microprocesseur, pour :
- recevoir un signal de détection de la présence d'un conducteur à l'intérieur du véhicule 1 émis par le détecteur de présence 92,
- déclencher la détermination de la masse associée au véhicule M lorsque ledit signal de détection de la présence d'un conducteur est reçu.

Dans certains modes de réalisation, le véhicule 1 peut comprendre des dispositifs supplémentaires configurés pour déterminer des paramètres supplémentaires.

Le véhicule 1 peut notamment comprendre un dispositif de mesure de vitesse 96 configuré pour mesurer une vitesse associée au véhicule Vv. Le dispositif de mesure de vitesse 96 peut faire partie du système d'instrumentation 9, comme représenté à la figure 2. On entend par « vitesse associée au véhicule Vv » toute vitesse en lien avec le déplacement du véhicule 1 dans la direction avant-arrière. Ainsi, la vitesse de rotation des roues 5, 6 est une vitesse associée au véhicule Vv. De même, la vitesse de rotation du au moins un moteur électrique 4, ou de l'éventuel réducteur associé audit ou à chacun desdits moteurs électriques, est une vitesse associée au véhicule Vv. Également, la vitesse de déplacement du véhicule 1 dans la direction avant-arrière est une vitesse associée au véhicule Vv.

Dans un exemple de réalisation, le dispositif de mesure de vitesse 96 peut être équipé d'un ou plusieurs tachymètres. Dans un mode de réalisation, un tachymètre peut être agencé au niveau d'un ou plusieurs du ou des au moins un moteur électrique 4. Dans un mode de réalisation, un tachymètre peut être agencé au niveau d'un ou plusieurs réducteurs associés audit ou à chacun desdits moteurs électriques. Dans un mode de réalisation, un tachymètre peut être agencé au niveau d'une ou plusieurs roues motrices 5, et/ou d'une ou plusieurs roues libres 6. Le dispositif de mesure de vitesse 96 peut alors être configuré pour déterminer la vitesse associée au véhicule Vv en fonction de la mesure effectuée par le tachymètre. Dans des variantes de réalisation, le dispositif de mesure de vitesse 96 peut comprendre un capteur de vitesse de rotation optique, magnétique ou tout autre moyen de mesure de la vitesse convenant à l'homme du métier.

Dans un mode de réalisation, la mesure de la vitesse associée au véhicule Vv peut être exprimée en km/h. Cela peut en particulier être le cas, lorsque la vitesse associée au véhicule Vv correspond à la vitesse de déplacement du véhicule 1 dans la direction avant-arrière.

Dans un mode de réalisation, la mesure de la vitesse associée au véhicule Vv peut être exprimée en tr/min. Cela peut en particulier être le cas, lorsque la vitesse associée au véhicule Vv correspond à la vitesse de rotation d'une roue motrice 5, d'une roue libre 6, d'un au moins un moteur électrique 4, ou d'un éventuel réducteur associé.

Dans un mode de réalisation, la mesure de la vitesse associée au véhicule Vv peut être exprimée en pourcentage. Ce pourcentage peut par exemple varier entre 0 % et 100 %. La valeur 0 % peut, par exemple, correspondre à une vitesse associée au véhicule Vv égale à 0 km/h, c'est-à-dire lorsque le véhicule 1 est à l'arrêt. La valeur 100 % peut correspondre à une vitesse associée au véhicule Vv égale, ou supérieure, à une valeur de seuil de vitesse maximale Vvmax. Cette valeur de seuil de vitesse maximale Vvmax peut, par exemple, être choisie égale à 45 km/h.

Dans d'autres modes de réalisation, la mesure de la vitesse associée au véhicule Vv peut être exprimée sous toute autre forme convenant à l'homme du métier.

Le véhicule 1 peut également comprendre un dispositif de mesure de pente 94 configuré pour déterminer l'angle de la pente P sur laquelle se situe le véhicule 1. Pour ce faire, le dispositif de mesure de pente 94 peut comprendre un accéléromètre ou tout autre dispositif apte à déterminer l'angle de la pente P sur laquelle se situe le véhicule 1. Le dispositif de mesure de pente 94 peut faire partie du système d'instrumentation 9, comme représenté à la figure 2.

Le véhicule 1 peut encore comprendre un dispositif de mesure de vent 95 configuré pour déterminer l'effort Fv exercé par le vent sur le véhicule 1. Pour ce faire, le dispositif de mesure de vent 95 peut comprendre un ou plusieurs capteurs de pression. Ce ou ces derniers peuvent être agencés à l'avant, et/ou à l'arrière, et/ou sur les côtés du véhicule 1. Dans un mode de réalisation, le dispositif de mesure de vent 95 peut comprendre une ou plusieurs jauges de contrainte. Ces jauges de contrainte peuvent être agencées sur une ou plusieurs parois avant et/ou arrière et/ou latérales de manière à mesurer la déformation de ladite ou desdites parois sous l'effet du vent. Dans des variantes de réalisation, le dispositif de mesure de vent 95 peut comprendre tout autre dispositif convenant à l'homme du métier et permettant de déterminer l'effort exercé par le vent sur le véhicule 1. Le dispositif de mesure de vent 95 peut faire partie du système d'instrumentation 9, comme représenté à la figure 2.

En pratique et comme représenté sur la figure 2, le au moins un moteur 4 peut être équipé d'un préactionneur 41.

Le préactionneur 41 peut, notamment, se présenter sous la forme d'une carte électronique de commande intégrée au au moins un moteur électrique 4. En effet, de nombreux moteurs électriques du commerce sont fournis avec une carte électronique de commande intégrée.

Le préactionneur 41 peut être configuré pour ajuster la valeur de l'intensité du courant électrique moteur en fonction d'une consigne moteur Cm. Pour ce faire, le préactionneur 41 peut alors être configuré pour :
- déterminer, en fonction d'une consigne moteur Cm, la valeur de l'intensité du courant électrique moteur Im à délivrer au au moins un moteur électrique 4,
- délivrer audit au moins un moteur électrique un courant électrique moteur Im d'intensité égale à ladite valeur déterminée.

Dans un mode de réalisation, la consigne moteur Cm peut être une consigne de couple moteur correspondant à la valeur du couple moteur désiré. La consigne moteur Cm peut alors être exprimée en N.m.

Dans un mode de réalisation, la consigne moteur Cm peut être une consigne de vitesse moteur correspondant à la valeur de la vitesse de rotation du moteur désirée. La consigne moteur Cm peut alors être exprimée en tr/min.

Dans un mode de réalisation, la consigne moteur Cm peut être une consigne de vitesse véhicule correspondant à la valeur de la vitesse de déplacement du véhicule désirée dans la direction avant-arrière. La consigne moteur Cm peut alors être exprimée en km/h ou en m/s.

Dans un mode de réalisation, le préactionneur 41 peut intégrer la fonction de convertisseur du courant électrique moteur Im continu en courant électrique moteur alternatif.

En référence à la figure 2, le véhicule 1 comprend un organe de commande 10. Ce dernier peut se présenter sous la forme d'une carte électronique déportée du moteur.

L'organe de commande 10 est configuré pour déterminer la consigne moteur Cm en fonction :
- de la masse associée au véhicule M,
- du signal d'accélérateur S,
- éventuellement de la vitesse associée au véhicule Vv,
- éventuellement, du signal d'accélérateur secondaire S',
- éventuellement de l'angle de la pente P,
- éventuellement de l'effort Fv exercé par le vent.

Pour ce faire, l'organe de commande 10 peut, notamment, être configuré pour :
- déterminer une consigne d'accélération Ca en fonction :
   - de la masse associée au véhicule M,
   - du signal d'accélérateur S,
   - de la vitesse associée au véhicule Vv,
   - éventuellement, du signal d'accélérateur secondaire S',
   - éventuellement de l'angle de la pente P,
   - éventuellement de l'effort Fv exercé par le vent,
- déterminer la consigne Cm en fonction de la consigne d'accélération Ca.

Dans une variante de réalisation, l'organe de commande 10 peut être configuré pour déterminer la consigne moteur Cm directement sans détermination intermédiaire de la consigne d'accélération Ca.

L'organe de commande 10 est, également, configuré pour transmettre la consigne moteur Cm au au moins un moteur électrique 4. En pratique, l'organe de commande 10 peut transmettre la consigne moteur Cm au préactionneur 41 équipant le moins un moteur 4. Pour ce faire, l'organe de commande 10 et le préactionneur 41 peuvent être reliés par un bus de données de type CAN (pour Controller Area Network en langue anglaise). Dans des variantes de réalisation, l'organe de commande 10 et le préactionneur 41 peuvent être reliés par tout autre moyen de connexion convenant à l'homme du métier, notamment des moyens de connexion filaire ou sans fil.

L'organe de commande 10 peut alors être configuré pour déterminer :
- un premier coefficient Co1 d'accélération dépendant de la masse associée au véhicule M, et
- un deuxième coefficient d'accélération Co2 dépendant du signal d'accélérateur S, et éventuellement du signal d'accélérateur secondaire S', et
- éventuellement, un troisième coefficient d'accélération Co3 dépendant de l'angle de la pente P,
- éventuellement, un quatrième coefficient d'accélération Co4 dépendant de l'effort Fv exercé par le vent,
- une consigne d'accélération maximale Camax dépendant de la vitesse associée au véhicule Vv.

Pour déterminer la consigne d'accélération Ca l'organe de commande peut multiplier la consigne maximale d'accélération Camax par les coefficients d'accélération.

Le premier coefficient d'accélération Co1 dépendant de la masse associée au véhicule M peut, préférentiellement, être déterminé par une méthode linéaire. La valeur du premier coefficient d'accélération Co 1 peut alors :
- être égale à 100 % lorsque la masse associée au véhicule M est égale ou inférieure à une masse minimale prédéterminée Mmin,
- être égale à 70 % lorsque la masse associée au véhicule M est égale ou supérieure à une masse maximale prédéterminée Mmax,
- prendre une valeur intermédiaire déterminée linéairement lorsque la masse associée au véhicule M est comprise entre la masse minimale prédéterminée Mmin et la masse maximale prédéterminée Mmax.

Dans un premier exemple de réalisation le signal d'accélérateur S est un signal d'accélérateur S en vitesse.

Par exemple, à régime de croisière, c'est-à-dire lorsque le conducteur cherche à maintenir sa vitesse, mais ne souhaite pas accélérer, le pédalage du conducteur est imparfait et la vitesse de rotation des pédales est irrégulière. Néanmoins, cette vitesse de rotation est généralement comprise dans un intervalle de valeurs donné.

Ainsi, dans le cas d'un signal d'accélérateur S en vitesse, à régime de croisière, la variation de la vitesse de rotation des pédales ΔVr mesurée reste comprise dans un intervalle nominal donné. Par exemple, cet intervalle nominal donné peut être de - 10 tr/min à 10 tr/min. Alternativement, cet intervalle nominal donné peut être de - 10 % à 10 %. Dès lors, lorsque l'organe de commande 10 mesure une variation de la vitesse de rotation des pédales ΔVr comprise dans cet intervalle nominal, l'organe de commande 10 peut alors déterminer que la valeur du deuxième coefficient d'accélération Co2 est nulle, c'est-à-dire égale à 0. En effet, le véhicule peut, dans certains cas, subir de faibles accélérations ou décélérations, par exemple dû à l'inclinaison d'une pente ou à l'effort exercé par le vent sur le véhicule.

En pratique, des filtres du signal peuvent être utilisés pour débarrasser le signal d'accélérateur S des légères variations de la vitesse de rotation des pédales Vr. Une fois lissé, uniquement la valeur 0 du signal d'accélérateur S est associée à un deuxième coefficient d'accélération Co2 nul.

Dans une variante de réalisation, le deuxième coefficient d'accélération Co2 est réputé nul tant que la vitesse de rotation des pédales ne dépasse pas une certaine valeur de seuil Vrmin. Différentes valeurs de seuil peuvent exister en fonction de la vitesse associée au véhicule Vv. Par exemple :
- pour une valeur de vitesse associée au véhicule Vv comprise entre 0 km/h et 5 km/h, la valeur du seuil Vrmin peut être égale à 0 tr/min,
- pour une valeur de vitesse associée au véhicule Vv comprise entre 6 km/h et 20 km/h, la valeur du seuil Vrmin peut être égale à 30 tr/min,
- pour une valeur de vitesse associée au véhicule Vv comprise entre 21 km/h et 40 km/h, la valeur du seuil Vrmin peut être égale à 50 tr/min,
- pour une valeur de vitesse associée au véhicule Vv comprise entre 41 km/h et 45 km/h, la valeur du seuil Vrmin peut être égale à 70 tr/min.

Lorsque le conducteur souhaite accélérer positivement, ledit conducteur peut augmenter momentanément et de façon plus importante la vitesse de rotation des pédales.

De même que pour le premier coefficient d'accélération Co1, le deuxième coefficient d'accélération Co2 dépendant de la vitesse de rotation des pédales Vr mesurée, peut, également, être déterminé par une méthode linéaire. La valeur du deuxième coefficient d'accélération Co2 peut alors :
- être égale à 100 % lorsque la vitesse de rotation des pédales Vr est supérieure ou égale à une vitesse de rotation des pédales maximale prédéterminée Vrmax,
- être égale à 0 % lorsque la vitesse de rotation des pédales Vr est inférieure ou égale à une vitesse de rotation des pédales minimale prédéterminée Vrmin,
- prendre une valeur intermédiaire déterminée linéairement lorsque la vitesse de rotation des pédales Vr est comprise entre la vitesse de rotation des pédales minimale prédéterminée Vrmin et la vitesse de rotation des pédales maximale prédéterminée Vrmax.

Alternativement, la valeur de ce coefficient d'accélération peut :
- être égale à 100 % lorsque la vitesse de rotation des pédales Vr est supérieure ou égale à une variation de la vitesse de rotation des pédales maximale prédéterminée ΔVrmax,
- être égale à 0 % lorsque la variation de la vitesse de rotation des pédales ΔVr est inférieure ou égale à une variation de la vitesse de rotation des pédales minimale prédéterminée ΔVrmin,
- prendre une valeur intermédiaire déterminée linéairement lorsque la variation de la vitesse de rotation des pédales ΔVr est comprise entre la variation de la vitesse de rotation des pédales minimale prédéterminée ΔVrmin et la variation de la vitesse de rotation des pédales maximale prédéterminée ΔVrmax.

Lorsque le véhicule comporte une gâchette d'accélération configurée pour générer un signal d'accélération secondaire S', ce dernier peut être utilisé pour augmenter le coefficient d'accélération associé au signal d'accélérateur S. Par exemple, pour un signal d'accélération secondaire S' de 100 %, le coefficient d'accélération peut être augmenté de 50 %. Également, pour un signal d'accélération secondaire S' de 50 %, le coefficient d'accélération peut être augmenté de 20 %. Cette augmentation d'accélération peut notamment être intéressante lorsque le conducteur doit, par exemple, démarrer le véhicule 1 en côte, ou qu'il s'apprête à franchir un obstacle comme un trottoir.

Dans un autre mode de réalisation, le deuxième coefficient d'accélération Co2 dépendant de la vitesse de rotation des pédales Vr mesurée, peut, également, être déterminé par une méthode par paliers.

Ainsi, lorsque l'organe de commande 10 mesure une variation de la vitesse de rotation des pédales ΔVr comprise dans un premier intervalle de vitesses de rotation, ledit organe de commande détermine une première valeur Co21 du deuxième coefficient d'accélération Co2. On parle alors d'un premier palier d'accélération. De façon similaire, lorsque l'organe de commande 10 mesure une variation de la vitesse de rotation des pédales ΔVr comprise dans un deuxième intervalle de vitesses de rotation, ledit organe de commande détermine une deuxième valeur Co22 du deuxième coefficient d'accélération Co2. On parle alors d'un deuxième palier d'accélération. De façon identique, il est possible de prévoir un ou plusieurs paliers supplémentaires. Pour chaque palier, la valeur correspondante du deuxième coefficient d'accélération Co2 est multipliée à la consigne d'accélération maximale Camax pour déterminer la consigne d'accélération Ca.

Dans un exemple préféré de réalisation d'un premier palier, le premier intervalle de vitesses de rotation peut être de 10 tr/min à 20 tr/min, ou alternativement de 10% à 20%, et la première valeur Co21 du deuxième coefficient d'accélération Co2 être égale à 50 %.

Dans un exemple préféré de réalisation d'un deuxième palier, le deuxième intervalle de vitesses de rotation peut être de 20 tr/min à 30 tr/min, ou alternativement de 20% à 30%, et la deuxième valeur Co22 du deuxième coefficient d'accélération Co2 être égale à 70 %.

Dans un exemple préféré de réalisation d'un troisième palier, le troisième intervalle de vitesses de rotation peut être de 30 tr/min à 40 tr/min, ou alternativement de 30% à 40%, et la troisième valeur Co23 du deuxième coefficient d'accélération Co2 être égale à 85 %.

Dans un exemple préféré de réalisation d'un quatrième palier, le quatrième intervalle de vitesses de rotation peut être de 40 tr/min à 50 tr/min, ou alternativement de 40% à 50%, et la valeur Co24 du deuxième coefficient d'accélération Co2 être égale à 100 %.

Une logique similaire peut être adoptée pour le premier coefficient d'accélération Co1 dépendant de la masse associée au véhicule M. Par exemple :
- un premier palier de masse associée au véhicule M compris entre 0 kg et 100 kg peut être associé à une première valeur Co11 du premier coefficient d'accélération Co1 égale à 100 %.
- un deuxième palier de masse associée au véhicule M compris entre 100 kg et 250 kg peut être associé à une deuxième valeur Co12 du premier coefficient d'accélération Co1 égale à 96 %.
- un troisième palier de masse associée au véhicule M compris entre 250 kg et 400 kg peut être associé à une troisième valeur Co13 du premier coefficient d'accélération Co1 égale à 88 %,
- un quatrième palier de masse associée au véhicule M compris entre 400 kg et au-delà de 400 kg peut être associé à une quatrième valeur Co14 du premier coefficient d'accélération Co1 égale à 70 %.

La consigne d'accélération Ca peut alors être obtenue en multipliant, à la valeur de consigne d'accélération maximale Camax, le coefficient d'accélération déterminé pour la masse associée au véhicule M et le coefficient d'accélération déterminé pour le signal d'accélérateur S.

Dans le cas d'un signal d'accélérateur S en intensité, le principe reste le même. L'organe de commande 10 peut être configuré pour déterminer un deuxième coefficient d'accélération Co2 en fonction de la variation de la valeur de l'intensité ΔIg du courant électrique induit Ig par la génératrice à pédales 8.

Ainsi, à régime de croisière, la variation de la valeur de l'intensité ΔIg reste comprise dans un intervalle nominal donné. Dès lors, lorsque l'organe de commande 10 mesure une variation de la valeur de l'intensité ΔIg comprise dans cet intervalle nominal, l'organe de commande 10 peut alors déterminer que la valeur du deuxième coefficient d'accélération Co2 est nulle, c'est-à-dire égale à 0.

De même que précédemment, par une méthode de détermination linéaire :
- un deuxième coefficient d'accélération Co2 de valeur égale à 100 % peut être associé à une variation de la valeur de l'intensité ΔIg supérieure ou égale à une variation de la valeur de l'intensité maximale prédéterminée ΔIgmax,
- un deuxième coefficient d'accélération Co2 de valeur égale à 0 % peut être associé à une variation de la valeur de l'intensité ΔIg inférieure ou égale à une variation de la valeur de l'intensité minimale prédéterminée ΔIgmin,
- un deuxième coefficient d'accélération Co2 de valeur intermédiaire peut être déterminé linéairement lorsque la variation de la valeur de l'intensité ΔIg est comprise entre la variation de la valeur de l'intensité minimale prédéterminée ΔIgmin et la variation de la valeur de l'intensité maximale prédéterminée Δlgmax.

De même, dans un mode de réalisation par paliers, lorsque l'organe de commande 10 mesure une variation de la valeur de l'intensité ΔIg :
- comprise dans un premier intervalle d'intensités, ledit organe de commande détermine une première valeur Co21 du deuxième coefficient d'accélération Co2.
- comprise dans un deuxième intervalle d'intensités, ledit organe de commande détermine une deuxième valeur Co22 du deuxième coefficient d'accélération Co2,
- etc.

Dans un autre mode de réalisation de l'organe de commande 10, la consigne d'accélération positive du véhicule 1 peut être déterminée conjointement par des méthodes de détermination linéaire et par paliers. Par exemple, le coefficient d'accélération du signal d'accélérateur S peut être déterminé par une méthode linéaire et le coefficient d'accélération de la masse associée au véhicule M peut être déterminé par une méthode par paliers, ou inversement.

Pour inverser le sens de déplacement du véhicule 1, ce dernier peut être équipé d'un sélecteur à plusieurs positions. Par exemple, le sélecteur peut comprendre une première position « marche avant » (ou « drive » en langue anglaise) et une deuxième position « marche arrière » (ou « rear » en langue anglaise). Lorsque le sélecteur est dans la position « marche avant », le véhicule se déplace vers l'avant. Lorsque le sélecteur est dans la position « marche arrière », le véhicule se déplace vers l'arrière. Le sélecteur peut également comprendre une troisième position « neutre » dans laquelle le véhicule est en roue libre.

Également, lorsque le véhicule fonctionne en « marche avant » et que le conducteur souhaite accélérer négativement, autrement dit décélérer, ledit conducteur peut inverser momentanément le sens de rotation des pédales.

Ainsi, dans le cas d'un signal d'accélérateur S en vitesse, l'organe de commande 10 mesure alors une vitesse de rotation des pédales Vr négative correspondant à une inversion du sens de rotation de la génératrice à pédales 8. L'organe de commande 10 détermine alors une valeur du deuxième coefficient d'accélération Co2 négative non nulle de façon similaire à l'accélération positive.

Également, dans le cas d'un signal d'accélérateur S en intensité, l'organe de commande 10 mesure alors une variation de la valeur de l'intensité ΔIg correspondant à une inversion du sens de rotation de la génératrice à pédales 8. L'organe de commande 10 détermine alors une valeur du deuxième coefficient d'accélération Co2 négative non nulle de façon similaire à l'accélération positive.

Comme pour l'accélération positive, il est également possible de prévoir un deuxième coefficient d'accélération Co2 négatif évoluant linéairement en fonction de la masse associée au véhicule M.

De même, il est également possible de prévoir un deuxième coefficient d'accélération Co2 négatif dont la valeur évolue selon plusieurs paliers d'accélération négative, par exemple :
- un premier palier associé à une valeur de deuxième coefficient d'accélération Co2 égale à -50 %,
- un deuxième palier associé à une valeur de deuxième coefficient d'accélération Co2 égale à -70 %,
- un troisième palier associé à une valeur de deuxième coefficient d'accélération Co2 égale à -85 %, et
- un quatrième palier associé à une valeur de deuxième coefficient d'accélération Co2 égale à -100 %.

Également, le deuxième coefficient d'accélération Co2 négatif du véhicule 1 peut être déterminée conjointement par des méthodes de détermination linéaire et par paliers.

Alternativement, le véhicule 1 peut comprendre un organe de commande du freinage indépendant de la génératrice à pédales 8. L'organe de commande du freinage est configuré pour générer un signal d'accélérateur négatif. Cet organe de commande du freinage est préférablement agencé à proximité, ou sur, un système de direction du véhicule 1. L'organe de commande du freinage peut se présenter sous la forme d'un levier, d'un bouton, ou sous toute autre forme convenant à l'homme du métier.

Lorsque le conducteur souhaite accélérer positivement, diverses valeurs de consigne d'accélération maximale Camax peuvent être associées à diverses valeurs de vitesse associée au véhicule Vv. En pratique, pour une valeur donnée de vitesse associée au véhicule Vv, l'organe de commande 10 sélectionne une valeur de consigne d'accélération maximale Camax positive non nulle prédéterminée. La valeur de la consigne d'accélération Ca peut alors être déterminée en multipliant, cette valeur de consigne d'accélération maximale Camax avec le premier coefficient d'accélération Co1 déterminé pour la masse associée au véhicule M et le deuxième coefficient d'accélération Co2 déterminé pour le signal d'accélérateur S, et éventuellement le signal d'accélération secondaire S'.

La consigne d'accélération maximale Camax peut être déterminée par une méthode par paliers.

Lorsque l'organe de commande 10 mesure une vitesse associée au véhicule Vv comprise dans un premier intervalle de vitesse associée au véhicule Vv1, ledit organe de commande sélectionne une première valeur de consigne d'accélération maximale Camax1 positive non nulle prédéterminée.

De même, lorsque l'organe de commande 10 mesure une vitesse associée au véhicule Vv comprise dans un deuxième intervalle de vitesse associée au véhicule Vv2, ledit organe de commande sélectionne une deuxième valeur d'accélération maximale Camax2 positive non nulle prédéterminée.

Il en est de même pour l'ensemble des « i » intervalles de vitesse associée au véhicule Vvi.

Par exemple, pour une vitesse associée au véhicule Vv exprimée en km/h, un premier intervalle de vitesse associée au véhicule Vv1 peut être de 1 km/h à 5 km/h, un deuxième intervalle de vitesse associée au véhicule Vv2 peut être de 6 km/h à 20 km/h, un troisième intervalle de vitesse associée au véhicule Vv3 peut être de 21 km/h à 40 km/h, un quatrième intervalle de vitesse associée au véhicule Vv4 peut être de 41 km/h à 45 km/h.

De façon similaire, pour une vitesse associée au véhicule Vv exprimée en %, un premier intervalle de vitesse associée au véhicule Vv1 peut être de 1 % à 11 %, un deuxième intervalle de vitesse associée au véhicule Vv2 peut être de 12% à 44 %, un troisième intervalle de vitesse associée au véhicule Vv3 peut être de 45 % à 89 %, un quatrième intervalle de vitesse associée au véhicule Vv4 peut être de 90 % à 100 %.

La première valeur de consigne d'accélération maximale Camax1 peut par exemple être égale à 1,25 m/s². La deuxième valeur de consigne d'accélération maximale Camax2 peut par exemple être égale à 2 m/s². La troisième valeur de consigne d'accélération maximale Camax3 peut par exemple être égale à 1,75 m/s². La quatrième valeur de consigne d'accélération maximale Camax4 peut par exemple être égale à 1,5 m/s².

Il en est de même pour la ou les valeurs de consigne d'accélération maximale Camax négatives non nulles prédéterminées.

Dans un mode de réalisation, la valeur de la consigne d'accélération peut également être déterminée en fonction de l'angle de la pente P mesuré. Pour ce faire, un troisième coefficient d'accélération Co3 peut être déterminé en fonction de l'angle de la pente P. Comme précédemment, ce troisième coefficient d'accélération Co3 peut être déterminé par une méthode linéaire, par une méthode par paliers, ou par toute autre méthode convenant à l'homme du métier. En particulier, la valeur de ce troisième coefficient d'accélération Co3 peut, par exemple, être supérieure à 1 lorsque la pente mesurée est positive, c'est-à-dire que le véhicule 1 se déplace en montée. La valeur du troisième coefficient d'accélération Co3 peut alors évoluer linéairement entre 1 et 1,3 en fonction de la valeur de la pente positive. Au contraire, la valeur de ce troisième coefficient d'accélération Co3 peut, par exemple, être inférieure à 1 lorsque la pente mesurée est négative, c'est-à-dire que le véhicule 1 se déplace en descente. La valeur du troisième coefficient d'accélération Co3 peut alors évoluer linéairement entre 1 et 0,7 en fonction de la valeur de la pente négative.

Dans un mode de réalisation, la valeur de la consigne d'accélération peut également être déterminée en fonction de l'effort Fv exercé par le vent. Pour ce faire, un quatrième coefficient d'accélération Co4 peut être déterminé en fonction de l'effort Fv exercé par le vent. Comme précédemment ce quatrième coefficient d'accélération Co4 peut être déterminé par une méthode linéaire, par une méthode par paliers, ou par toute autre méthode convenant à l'homme du métier. En particulier, la valeur de ce quatrième coefficient d'accélération Co4 peut, par exemple, être supérieure à 1 lorsque l'effort Fv exercé par le vent s'oppose au déplacement du véhicule 1. La valeur du quatrième coefficient d'accélération Co4 peut alors évoluer linéairement entre 1 et 1,15 en fonction de la valeur de l'effort Fv. Au contraire, la valeur de ce quatrième coefficient d'accélération Co4 peut, par exemple, être inférieure à 1 lorsque l'effort Fv exercé par le vent participe au déplacement du véhicule 1. La valeur du quatrième coefficient d'accélération Co4 peut alors évoluer linéairement entre 1 et 0,95 en fonction de la valeur de l'effort Fv.

Dans une variante de réalisation, l'organe de commande 10 peut prendre en compte une puissance délivrée par le au moins un moteur électrique 4 à un instant t comme indicateur de la vitesse associée au véhicule Vv. Pour ce faire, le véhicule 1 peut comprendre un dispositif de mesure de puissance configuré pour mesurer une puissance délivrée par le au moins un moteur électrique 4 à un instant t.

Dans un mode de réalisation, la mesure de la puissance délivrée par le au moins un moteur électrique 4 à un instant t peut être exprimée en watt, en pourcentage, ou sous toute autre forme convenant à l'homme du métier.

L'organe de commande 10 peut alors être configuré pour déterminer la consigne d'accélération maximale Camax en fonction de la puissance délivrée par le au moins un moteur électrique 4 à un instant t.

En pratique, pour une valeur donnée de puissance délivrée par le au moins un moteur électrique 4, l'organe de commande 10 sélectionne une valeur de consigne d'accélération maximale Camax positive non nulle prédéterminée.

Une fois la consigne d'accélération Ca déterminée, l'organe de commande 10 peut, par exemple, calculer la consigne moteur Cm selon les formules de calcul conventionnelles. Le préactionneur 41 peut ensuite convertir la consigne moteur Cm en valeur de l'intensité du courant électrique moteur Im.

Par exemple, pour un conducteur de 75 kg, et une charge nulle, et un véhicule 1 se déplaçant à une vitesse initiale de 15 km/h, la valeur de l'intensité du courant électrique moteur Im à délivrer au au moins un moteur électrique 4 peut être déterminée égale à 62 A, pour une consigne moteur Cm calculée sur la base d'une valeur de consigne d'accélération Ca égale 1 m/s².

Pour un conducteur de 75 kg, et une charge de 100 kg, et un véhicule 1 se déplaçant à une vitesse initiale de 15 km/h, la valeur de l'intensité du courant électrique moteur Im à délivrer au au moins un moteur électrique 4 peut être déterminée égale à 74 A, pour une consigne moteur Cm calculée sur la base d'une valeur de consigne d'accélération Ca égale 1 m/s².

Pour un conducteur de 75 kg, et une charge de 300 kg, et un véhicule 1 se déplaçant à une vitesse initiale de 15 km/h, la valeur de l'intensité du courant électrique moteur Im à délivrer au au moins un moteur électrique 4 peut être déterminée égale à 101 A pour une consigne moteur Cm calculée sur la base d'une valeur de consigne d'accélération Ca égale 1 m/s².

De même, pour un conducteur de 75 kg, et une charge nulle, et un véhicule 1 se déplaçant à une vitesse initiale de 30 km/h, la valeur de l'intensité du courant électrique moteur Im à délivrer au au moins un moteur électrique 4 peut être déterminée égale à 126 A, pour une consigne moteur Cm calculée sur la base d'une valeur de consigne d'accélération Ca égale 1 m/s².

Pour un conducteur de 75 kg, et une charge de 100 kg, et un véhicule 1 se déplaçant à une vitesse initiale de 30 km/h, la valeur de l'intensité du courant électrique moteur Im à délivrer au au moins un moteur électrique 4 peut être déterminée égale à 152 A, pour une consigne moteur Cm calculée sur la base d'une valeur de consigne d'accélération Ca égale 1 m/s².

Pour un conducteur de 75 kg, et une charge de 300 kg, et un véhicule 1 se déplaçant à une vitesse initiale de 30 km/h, la valeur de l'intensité du courant électrique moteur Im à délivrer au au moins un moteur électrique 4 peut être déterminée égale à 208 A pour une consigne moteur Cm calculée sur la base d'une valeur de consigne d'accélération Ca égale 1 m/s².

En référence à la figure 2, le véhicule 1 peut encore comprendre un détecteur de virage 97 configuré pour générer un signal de détection D lorsqu'il détecte que ledit véhicule se déplace selon une courbe. Le détecteur de virage 97 peut faire partie du système d'instrumentation 9, comme représenté à la figure 2.

Le détecteur de virage 97 peut se présenter sous la forme d'un capteur de mouvement du système de direction du véhicule 1, d'un accéléromètre ou sous toute autre forme adaptée pour générer le signal de détection D.

L'organe de commande 10 peut alors être configuré pour corriger la valeur de consigne d'accélération Ca de manière à la rendre égale à une valeur limite d'accélération prédéterminée adaptée à la masse associée au véhicule M, lorsque ledit organe de commande reçoit le signal de détection D généré.

Par exemple, lorsque la masse associée au véhicule M correspond au cas d'un conducteur de 75 kg, et une charge de 300 kg, la valeur limite d'accélération peut être égale à 1,2 m/s² lorsque le véhicule 1 se déplace selon une courbe.

Ainsi, si la valeur de la consigne d'accélération déterminée par l'organe de commande 10 est supérieure à la valeur limite d'accélération, et que le véhicule 1 se déplace selon une courbe, l'organe de commande 10 corrige la valeur de la consigne d'accélération Ca de manière à la rendre égale à la valeur limite d'accélération prédéterminée, peu importe le signal d'accélérateur supérieur.

Dans la variante de réalisation, dans laquelle la consigne moteur Cm est déterminée directement, sans détermination intermédiaire de la consigne d'accélération Ca, l'organe de commande 10 peut notamment être configuré pour déterminer :
- un premier coefficient de couple Cc1 en fonction de la masse associée au véhicule M de façon analogue à la détermination du premier coefficient d'accélération Co1 précédemment décrit,
- un deuxième coefficient de couple Cc2 en fonction du signal d'accélérateur S, et éventuellement du signal d'accélérateur secondaire S', de façon analogue à la détermination du deuxième coefficient d'accélération Co2 précédemment décrit,
- éventuellement, un troisième coefficient de couple Cc3 en fonction de l'angle de la pente P de façon analogue à la détermination du troisième coefficient d'accélération Co3 précédemment décrit,
- éventuellement, un quatrième coefficient de couple Cc4 en fonction de l'effort Fv exercé par le vent de façon analogue à la détermination du quatrième coefficient d'accélération Co4 précédemment décrit,
- une valeur de consigne de couple maximale Ccmax, de façon analogue à la détermination de la consigne d'accélération maximale Camax précédemment décrite.

L'organe de commande 10 peut, ensuite, calculer la consigne de couple moteur en multipliant la valeur de consigne de couple maximale Ccmax par les coefficients de couple précédemment déterminés.

Selon un autre aspect, l'invention concerne un procédé de commande moteur d'un véhicule 1 apte à transporter un conducteur et une charge tel que décrit précédemment. Le procédé selon l'invention comprend les étapes suivantes :
- a) déterminer une masse associée au véhicule M dépendant de la masse de ladite charge Mch lorsqu'une charge est transportée par ledit véhicule comme première variable,
- b) générer un signal d'accélérateur S comme deuxième variable,
- c) déterminer une vitesse associée au véhicule (Vv) comme troisième variable,
- d) déterminer une consigne moteur Cm en fonction desdites variables,
- e) transmettre ladite consigne moteur audit au moins un moteur électrique.

L'étape a) de détermination de la masse associée au véhicule M peut être mise en œuvre par le dispositif de mesure de masse 91 précédemment décrit, ou par tout autre dispositif adapté pour mettre en œuvre une telle étape.

Selon un mode de réalisation, le procédé peut comprendre l'étape :
- a') déterminer une masse associée au véhicule M dépendant également de la masse du conducteur Mco.

Ainsi, la masse associée au véhicule M est déterminée en fonction de la masse du conducteur Mco, et lorsqu'une charge est transportée par le véhicule 1, en fonction de la masse de ladite charge Mch.

Préférentiellement, et de manière à limiter la consommation d'énergie électrique nécessaire à la mise en œuvre de l'étape a), la détermination de la masse associée au véhicule M peut être réalisée de manière séquentielle. Par exemple, l'étape a) peut comprendre la sous-étape :
- a1) déterminer la masse associée au véhicule M lorsque le véhicule 1 est à l'arrêt.

Dans ce mode de réalisation à détermination séquentielle, il peut être important de s'assurer que le conducteur est présent dans le véhicule 1 avant de déterminer la masse associée au véhicule M. Ainsi, l'étape a1) peut comprendre les sous-étapes :
- a11) détecter la présence d'un conducteur à l'intérieur du véhicule 1,
- a12) déclencher la détermination de la masse associée au véhicule M lorsque ladite présence est détectée.

En outre, la masse associée au véhicule M peut être déterminée à tout moment, et notamment lorsque le véhicule 1 est en mouvement. Pour ce faire, l'étape a) peut comprendre la sous-étape :
- a2) déterminer la masse associée au véhicule M lorsque le véhicule 1 est en mouvement.

Lorsque la masse associée au véhicule M est mesurée en mouvement, cette mesure peut notamment être perturbée par les effets cinétiques et dynamiques du véhicule 1. Ainsi, l'étape a2) peut comprendre les sous-étapes suivantes :
- a21) mesurer une masse associée au véhicule en mouvement Mvem,
- a22) corriger la mesure de manière à compenser les effets cinétiques et dynamiques liés au mouvement du véhicule 1 et impactant la mesure.

L'étape b) de génération du signal d'accélérateur S peut être mise en œuvre par la génératrice à pédales 8 précédemment décrite, ou par tout autre dispositif convenant à l'homme du métier. L'étape b) de génération de la consigne peut être mise en œuvre postérieurement à l'étape a) lorsque la masse associée au véhicule M est déterminée pour le véhicule 1 à l'arrêt. L'étape b) de génération de la consigne peut être mise en œuvre aussi bien préalablement, simultanément, que postérieurement à l'étape a) lorsque la masse associée au véhicule M est déterminée pour le véhicule 1 en mouvement.

L'étape c) peut être mise en œuvre par le dispositif de mesure de vitesse 96 précédemment décrit ou par tout autre moyen convenant à l'homme du métier. L'étape c) peut être mise en œuvre avant, après, ou simultanément, à l'étape a) et/ou à l'étape b).

L'étape c) du procédé peut également comprendre la sous-étape :
- c1) déterminer une puissance délivrée par le au moins un moteur électrique 4 à un instant t.

L'étape c1) peut être mise en œuvre par le dispositif de mesure de puissance précédemment décrit ou par tout autre moyen convenant à l'homme du métier.

Dans un mode de réalisation, le procédé peut également comprendre l'étape :
- f) déterminer l'angle de la pente P sur laquelle se situe le véhicule 1, comme quatrième variable.

L'étape f) peut être mise en œuvre par le dispositif de mesure de pente 94 précédemment décrit ou par tout autre moyen convenant à l'homme du métier. L'étape f) peut être mise en œuvre avant, après, ou simultanément, à l'étape a) et/ou à l'étape b) et/ou à l'étape c). L'étape f) est mise en œuvre avant les étapes d) et e) afin qu'à l'étape d) la variable supplémentaire soit prise en compte dans la détermination de la consigne moteur Cm. Ainsi, à l'étape d) la détermination de la consigne moteur Cm est réalisée en fonction de la masse associée au véhicule M, du signal d'accélérateur S, éventuellement de la vitesse associée au véhicule Vv ou alternativement de la puissance délivrée par le au moins un moteur électrique 4 à un instant t, et de l'angle de la pente P sur laquelle se situe le véhicule 1.

Dans un mode de réalisation, le procédé peut également comprendre l'étape :
- g) déterminer l'effort Fv exercé par le vent sur le véhicule, comme cinquième variable.

L'étape g) peut être mise en œuvre par le dispositif de mesure de vent 95 précédemment décrit ou par tout autre moyen convenant à l'homme du métier. L'étape g) peut être mise en œuvre avant, après, ou simultanément, à l'étape a) et/ou à l'étape b) et/ou à l'étape c) et/ou l'étape f). L'étape g) est mise en œuvre avant les étapes d) et e) afin qu'à l'étape d) la variable supplémentaire soit prise en compte dans la détermination de la consigne moteur Cm. Ainsi, à l'étape d) la détermination de la consigne moteur Cm est réalisée en fonction de la masse associée au véhicule M, du signal d'accélérateur S, éventuellement de la vitesse associée au véhicule Vv ou alternativement de la puissance délivrée par le au moins un moteur électrique 4 à un instant t, éventuellement de l'angle de la pente P sur laquelle se situe le véhicule 1, et l'effort Fv exercé par le vent sur ledit véhicule.

L'étape d) peut comprendre les sous-étapes :
- d1) déterminer, en fonction des variables, une consigne d'accélération Ca de manière à permettre l'ajustement de la valeur de l'accélération du véhicule pour quelle soit comprise dans l'intervalle de valeurs d'accélération spécifique,
- d2) déterminer une consigne moteur Cm en fonction de la consigne d'accélération Ca.

L'étape d1) peut comprendre les sous-étapes :
- d11) déterminer, en fonction de la masse associée au véhicule M, un premier coefficient d'accélération Co1,
- d12) déterminer, en fonction du signal d'accélérateur S, un deuxième coefficient d'accélération Co2,
- d13) déterminer, éventuellement en fonction de la vitesse associée au véhicule Vv ou de de la puissance délivrée par le au moins un moteur électrique 4 à un instant t, une valeur de consigne d'accélération maximale Camax,
- d14) éventuellement, déterminer, en fonction de l'angle de la pente P mesuré, un troisième coefficient d'accélération Co3,
- d15) éventuellement, déterminer, en fonction de l'effort Fv exercé par le vent mesuré, un quatrième coefficient d'accélération Co4,
- d16) calculer la valeur de la consigne d'accélération Ca en multipliant la valeur de consigne d'accélération maximale Camax avec le premier coefficient d'accélération Co1, le deuxième coefficient d'accélération Co2, éventuellement le troisième coefficient d'accélération Co3, et éventuellement le quatrième coefficient d'accélération Co4.

Selon un premier mode de réalisation, l'étape d12) peut comprendre les sous étapes :
- d121) mesurer la vitesse de rotation des pédales Vr,
- d122) déterminer à partir de la vitesse de rotation des pédales Vr mesurée, un deuxième coefficient d'accélération Co2.

Alternativement aux sous-étapes d121) et d122), l'étape d12) peut comprendre les étapes suivantes :
- d121') mesurer l'intensité du courant électrique induit Ig par la génératrice à pédales 8,
- d122') déterminer à partir de la valeur de la variation de l'intensité du courant électrique induit Ig mesurée, un deuxième coefficient d'accélération Co2.

Le procédé peut également comprendre l'étape :
- h) ajuster la valeur de l'intensité du courant électrique moteur Im en fonction de ladite consigne moteur.

Pour ce faire, l'étape h) peut notamment comprendre les sous-étapes :
- h1) déterminer, en fonction de la consigne moteur Cm, la valeur de l'intensité du courant électrique moteur Im à délivrer au au moins un moteur électrique 4,
- h2) délivrer, audit au moins un moteur électrique, un courant électrique moteur Im d'intensité égale à la valeur déterminée.

Les étapes h1) et h2) sont préférentiellement mises en œuvre par le préactionneur 41 précédemment décrit. Dans des variantes de réalisation, les étapes h1) et h2) peuvent être mises en œuvre par tout autre moyen convenant à l'homme du métier.

De manière à limiter les risques de renversement du véhicule 1 dans les virages lorsque ledit véhicule transporte une charge lourde, le procédé peut comprendre des étapes de limitation de vitesse dans les virages. En particulier, le procédé peut comprendre l'étape i), et la sous-étape d17) de l'étape d), suivantes :
- i) détecter lorsque le véhicule 1 se déplace selon une courbe,
- d17) éventuellement, corriger la valeur de la consigne d'accélération de manière à la rendre égale à une valeur limite d'accélération prédéterminée adaptée à la masse associée au véhicule M.

Pour ce faire, l'étape d17) peut comprendre les deux sous-étapes suivantes :
- d171) déterminer, en fonction de la masse associée au véhicule M, une valeur de consigne d'accélération limite Clim,
- d1722) comparer la valeur de la consigne d'accélération Ca avec la valeur de consigne d'accélération limite Clim ;
- d173) si la valeur de la consigne d'accélération Ca est supérieure à la valeur de consigne d'accélération limite Clim, remplacer la valeur de la consigne d'accélération Ca par la valeur de consigne d'accélération limite Clim,
- d174) si la valeur de la consigne d'accélération Ca a été modifiée, exécuter l'étape d2) permettant de déterminer une consigne moteur Cm en fonction de la consigne d'accélération Ca.

L'étape i) peut être mise en œuvre par un détecteur de virage 97 tel que précédemment décrit, ou par tout autre dispositif adapté pour une telle mise en œuvre.

L'étape i) peut être mise en œuvre avant, après ou simultanément à l'étape a), l'étape b) et/ou à l'étape c) et/ou l'étape f) et/ou l'étape g) et/ou une ou plusieurs des sous-étapes d11) à d16). L'étape i) est mise en œuvre avant la sous-étape d17) afin qu'à la sous-étape d17) la variable supplémentaire soit prise en compte dans la correction de la correction de la valeur de la consigne d'accélération.

Selon un mode de réalisation, à l'étape d), pour une gamme de vitesses prédéterminée, la consigne moteur Cm est :
- déterminée en fonction d'un premier couple moteur prédéterminé Cp1 lorsque le signal d'accélérateur S est inférieur à un seuil, et
- déterminée en fonction d'un deuxième couple moteur prédéterminé Cp2, lorsque le signal d'accélérateur S est supérieur audit seuil, la valeur absolue dudit deuxième couple moteur prédéterminé Cp2 étant supérieure à la valeur absolue dudit premier couple moteur prédéterminé Cp1, soit |Cp2| > |Cp1|.

## Revendications

1. Véhicule (1) apte à transporter un conducteur et une charge comprenant :
• au moins un moteur électrique (4) configuré pour entraîner au moins une roue (5) dudit véhicule de manière à déplacer ledit véhicule à une vitesse et à une accélération à un instant t,
• un accumulateur d'énergie électrique (7) configuré pour alimenter ledit au moins un moteur électrique en électricité,
• un accélérateur configuré pour générer un signal d'accélérateur (S),
• un dispositif de mesure de masse (91) configuré pour déterminer une masse associée au véhicule (M) dépendante de la masse de ladite charge lorsqu'une charge est transportée par ledit véhicule,
• un dispositif de mesure de vitesse (96) configuré pour mesurer une vitesse associée au véhicule (Vv),
• un organe de commande (10) configuré pour déterminer une consigne moteur (Cm) en fonction de ladite masse associée au véhicule, dudit signal d'accélérateur, et éventuellement de ladite vitesse associée au véhicule, puis transmettre ladite consigne moteur audit au moins un moteur électrique ;
**caractérisé en ce que** ledit accélérateur est une génératrice à pédales (8), également configurée pour charger ledit accumulateur d'énergie électrique et/ou alimenter ledit au moins un moteur électrique en électricité.

2. Véhicule selon la revendication 1, **caractérisé en ce que** le dispositif de mesure de masse (91) est configuré pour déterminer une masse associée au véhicule (M) dépendant également de la masse du conducteur.

3. Véhicule selon la revendication 2, **caractérisé en ce qu'il** comprend un détecteur de présence configuré pour détecter la présence d'un conducteur à l'intérieur du véhicule, et un déclencheur configuré pour déclencher la détermination de la masse associée au véhicule (M) lorsque ledit détecteur de présence détecte la présence d'un conducteur à l'intérieur dudit véhicule.

4. Véhicule selon l'une des revendications précédentes, **caractérisé en ce qu'il** comprend un dispositif de mesure de pente (94) configuré pour mesurer l'angle de la pente (P) sur laquelle se situe ledit véhicule et **en ce que** l'organe de commande (10) est configuré pour déterminer ladite consigne moteur en fonction de la masse associée au véhicule (M), du signal d'accélérateur (S), et éventuellement de la vitesse associée au véhicule (Vv), et dudit angle de la pente mesuré.

5. Véhicule selon l'une des revendications précédentes, **caractérisé en ce qu'il** comprend un dispositif de mesure de vent (95) configuré pour mesurer l'effort (Fv) exercé par le vent sur ledit véhicule et **en ce que** l'organe de commande (10) est configuré pour déterminer ladite consigne moteur en fonction de la masse associée au véhicule (M), du signal d'accélérateur (S), et éventuellement de la vitesse associée au véhicule (Vv), éventuellement de l'angle de la pente (P), et dudit effort exercé par le vent mesuré.

6. Procédé de commande moteur d'un véhicule (1) apte à transporter un conducteur et une charge, ledit véhicule comprenant :
• au moins un moteur électrique (4) configuré pour entraîner au moins une roue (5) dudit véhicule de manière à déplacer ledit véhicule à une vitesse et à une accélération à un instant t,
• un accumulateur d'énergie électrique (7) configuré pour alimenter ledit au moins un moteur électrique en électricité,
• une génératrice à pédales (8) configurée générer un signal d'accélérateur (S), et pour charger l'accumulateur d'énergie électrique (7) et/ou alimenter le au moins un moteur électrique (4) en électricité,
**caractérisé en ce que** ledit procédé comprend les étapes suivantes :
• a) déterminer une masse associée au véhicule (M) dépendante de la masse de ladite charge lorsqu'une charge est transportée par ledit véhicule, comme première variable,
• b) générer un signal d'accélérateur (S) au moyen de ladite génératrice à pédales, comme deuxième variable,
• c) déterminer une vitesse associée au véhicule (Vv), comme troisième variable,
• d) déterminer une consigne moteur (Cm) en fonction desdites variables,
• e) transmettre ladite consigne moteur audit au moins un moteur électrique.

7. Procédé selon la revendication 6, **caractérisé en ce qu'**il comprend l'étape :
• h) ajuster la valeur de l'intensité du courant électrique moteur (Im) en fonction de ladite consigne moteur (Cm).

8. Procédé selon l'une des revendications 6 ou 7, **caractérisé en ce qu'il** comprend l'étape :
• a') déterminer une masse associée au véhicule (M) dépendant également de la masse du conducteur (Mco).

9. Procédé selon la revendication 8, **caractérisé en ce que** l'étape a) comprend la sous-étape :
• a1) déterminer la masse associée au véhicule (M) lorsque le véhicule (1) est à l'arrêt.

10. Procédé selon la revendication 8, **caractérisé en ce que** l'étape a) comprend la sous-étape :
• a2) déterminer la masse associée au véhicule (M) lorsque le véhicule (1) est en mouvement, en :
∘mesurant une masse associée au véhicule en mouvement,
∘ corrigeant la mesure de manière à compenser les effets cinétiques et dynamiques liés au mouvement dudit véhicule et impactant la mesure.

11. Procédé selon l'une des revendications précédentes, **caractérisé en ce que** à l'étape d), pour une gamme de vitesses prédéterminée, la consigne moteur (Cm) est :
∘ déterminée en fonction d'un premier couple moteur prédéterminé lorsque le signal d'accélérateur (S) est inférieur à un seuil, et
∘ déterminée en fonction d'un deuxième couple moteur prédéterminé, lorsque le signal d'accélérateur (S) est supérieur audit seuil, la valeur absolue dudit deuxième couple moteur prédéterminé étant supérieure à la valeur absolue dudit premier couple moteur prédéterminé.
